# EUROPEAN PATENT APPLICATION

(11) **EP 3 591 965 A1**
(43) Date of publication of application: **08.01.2020**
(21) Application number: 19183348.2
(22) Date of filing: 28.06.2019
(51) Int. Cl.: H04N 7/18, H04M 1/02, H04M 11/02

(54) **LOBBY STATION, DOOR PHONE SYSTEM AND COMMUNICATION METHOD**

(30) Priority: 02.07.2018 JP 2018126231; 02.07.2018 JP 2018126234
(71) Applicant: Panasonic Intellectual Property Management Co., Ltd., Osaka-shi, Osaka 540-6207 (JP)
(72) Inventor: YAMAMOTO, Takashi, Osaka, 540-6207 (JP); KUWAYAMA, Aiichiro, Osaka, 540-6207 (JP); NODA, Hiroshi, Osaka, 540-6207 (JP)
(74) Representative: Eisenführ Speiser

(57) **Abstract**

To make it possible to use many of existing facilities as they are without adding a new apparatus when switching from an analog system to a digital system. A camera module (104) captures a subject to generate digital video data, and sequentially applies compression processing on the digital video data. Controller (105) converts the digital video data subjected to the compression processing into a packet. Digital modulator (106) performs digital modulation on a digital data string of the packet and outputs a video signal of a carrier within a preset frequency band.

## Description

### Technical Field

The present disclosure relates to a lobby station, a door phone system and a communication method.

### Background Art

Door phone systems for detached houses are widespread each of which includes an entrance slave unit installed outside near an entrance of a house and a base unit inside the house. Generally, in the door phone systems, the entrance slave unit and the base unit are connected by a two-wire cable.

Demand for higher quality video is becoming stronger due to an increase in awareness of crime prevention and the like in recent years. For this reason, in the door phone systems for detached houses, a study for switching communication via the two-wire cable from an analog system to a digital system has been progressing. As a digital door phone system can transmit and receive large volumes of data, users can view high quality video. In addition, when switching to the digital system, a door phone system allowing the existing two-wire cable to be used as is has also been developed for low-cost and simple installation.

In recent years, door phone systems for multiple dwelling houses such as condominiums are also becoming widespread. Also in the door phone systems for multiple dwelling houses, systems in which apparatuses are connected by the two-wire cable are the mainstream.

In analog door phones for multiple dwelling houses, deterioration in video quality becomes noticeable due to signal deterioration by going through a plurality of distributors (repeaters) and signal deterioration caused by long wiring. Therefore, it is considered that, in the future, in the door phone systems for multiple dwelling houses, switching from the analog system to the digital system will be advanced in order to respond to demand for higher quality video and the like.

PTL 1 discloses a digital multiple-dwelling-house intercom system (door phone system for a multiple dwelling house) that includes: a collective entrance unit (lobby station) installed at a shared entrance of the multiple dwelling house; a dwelling base unit (indoor monitor) installed in each dwelling unit for a resident to respond to a call from the collective entrance unit; and a controller (distributor) connected with the collective entrance unit via a two-wire cable in a shared portion and also connected with the dwelling base unit via a two-wire cable for each dwelling unit.

Also in the door phone systems for multiple dwelling houses, it is desired to use existing facilities (two-wire cable, apparatuses and the like) as much as possible when switching from the analog system to the digital system for low cost and simple installation. The door phone system for a multiple dwelling house described in PTL 1 can use the existing two-wire cable as is.

### Citation List

### Patent Literature

PTL 1
Japanese Patent Application Laid-Open No. 2007-202047

### Summary of Invention

### Technical Problem

However, in the conventional digital door phone systems for multiple dwelling houses, it is necessary to replace all apparatuses (lobby station, indoor monitor and distributor) or add a new apparatus when switching from the analog system.

For example, in the door phone system for a multiple dwelling house of PTL 1, it is necessary to newly add a digital signal transmission adapter and a coupler in order to implement digital communication.

The present disclosure is to provide a lobby station, a door phone system and a communication method that can use many of existing facilities (two-wire cable, distributor and the like) as they are without adding a new apparatus when switching from the analog system to the digital system.

### Solution to Problem

A lobby station of the present disclosure is in a door phone system including the lobby station, an indoor monitor, and a distributor that relays communication between the lobby station and the indoor monitor, in which the lobby station transmits a video signal and a downlink audio signal to the indoor monitor via the distributor, and the indoor monitor transmits an uplink audio signal to the lobby station via the distributor, the lobby station including: a camera module that captures a subject to generate digital video data and applies compression processing to the digital video data; a controller that converts the digital video data subjected to the compression processing into a packet; and a digital modulator that performs digital modulation on a digital data string of the packet and thereby outputs the video signal of a carrier within a preset frequency band.

A door phone system of the present disclosure includes a lobby station, an indoor monitor, and a distributor that relays communication between the lobby station and the indoor monitor, in which the lobby station: captures a subject to generate digital video data; applies compression processing to the digital video data; converts the digital video data subjected to the compression processing into a packet; performs digital modulation on a digital data string of the packet and thereby generates a video signal of a carrier within a preset frequency band; and transmits the video signal and a downlink audio signal to the indoor monitor via the distributor, and the indoor monitor transmits an uplink audio signal to the lobby station via the distributor.

A communication method of the present disclosure is a method of a door phone system including a lobby station, an indoor monitor, and a distributor that relays communication between the lobby station and the indoor monitor, the communication method including: capturing, by the lobby station, a subject to generate digital video data; applying, by the lobby station, compression processing to the digital video data; converting, by the lobby station, the digital video data subjected to the compression processing into a packet; performing, by the lobby station, digital modulation on a digital data string of the packet and thereby generating a video signal of a carrier within a preset frequency band; transmitting, by the lobby station, the video signal and a downlink audio signal to the indoor monitor via the distributor; and transmitting, by the indoor monitor, an uplink audio signal to the lobby station via the distributor.

The comprehensive or specific aspects may be implemented by a system, an integrated circuit, a computer program or a recording medium, or may be implemented by any combination of a system, an apparatus, a method, an integrated circuit, a computer program and a recording medium.

### Advantageous Effects of Invention

According to one aspect of the present disclosure, it is possible to use many of existing facilities as they are without adding a new apparatus when switching from the analog system to the digital system.

### Brief Description of Drawings

FIG. 1 is a system configuration diagram showing a configuration of a door phone system according to Embodiment 1 of the present disclosure;
FIG. 2 illustrates a frame format and a time slot format according to Embodiment 1 of the present disclosure;
FIG. 3 is a block diagram showing a configuration of a lobby station according to Embodiment 1 of the present disclosure;
FIG. 4 illustrates one example of button arrangement of the lobby station according to Embodiment 1 of the present disclosure;
FIG. 5 is a block diagram showing a configuration of an indoor monitor according to Embodiment 1 of the present disclosure;
FIG. 6 is a block diagram showing a configuration of a distributor according to Embodiment 1 of the present disclosure;
FIG. 7 illustrates time difference of a prescribed number of frames due to difference in crystal oscillation frequency in Embodiment 1 of the present disclosure;
FIG. 8 is a block diagram showing an internal configuration of a crystal oscillation frequency controller of the lobby station in Embodiment 1 of the present disclosure;
FIG. 9 is a block diagram showing an internal configuration of a crystal oscillation unit of the lobby station in Embodiment 1 of the present disclosure;
FIG. 10 is a flowchart showing a flow of relay control of the distributor according to Embodiment 1 of the present disclosure;
FIG. 11 is a sequence diagram (lobby station activation) from a standby state to a communication state of the door phone system according to Embodiment 1 of the present disclosure;
FIG. 12 is a sequence diagram (indoor monitor activation) from the standby state to the communication state of the door phone system according to Embodiment 1 of the present disclosure;
FIG. 13A illustrates frequency bands of respective signals transmitted and received by an analog lobby station;
FIG. 13B illustrates frequency bands of respective signals transmitted and received by the lobby station according to Embodiment 1 of the present disclosure;
FIG. 14 is a block diagram showing a configuration of a lobby station according to Embodiment 2 of the present disclosure; and
FIG. 15 is a block diagram showing a configuration of an indoor monitor according to Embodiment 2 of the present disclosure.

### Description of Embodiments

Hereinafter, embodiments of the present disclosure will be described in detail using the accompanying drawings with reference to the drawings as appropriate. However, detailed description more than necessary may be omitted. For example, detailed description of already well-known matters and redundant description of substantially the same configuration may be omitted. This is to avoid unnecessary redundancy in the following description and facilitate understanding by those skilled in the art.

The accompanying drawings and following description are provided for those skilled in the art to fully understand the present disclosure, and are not intended to limit the subject matter described in the appended claims.

### (Embodiment 1)

### <Outline of System>

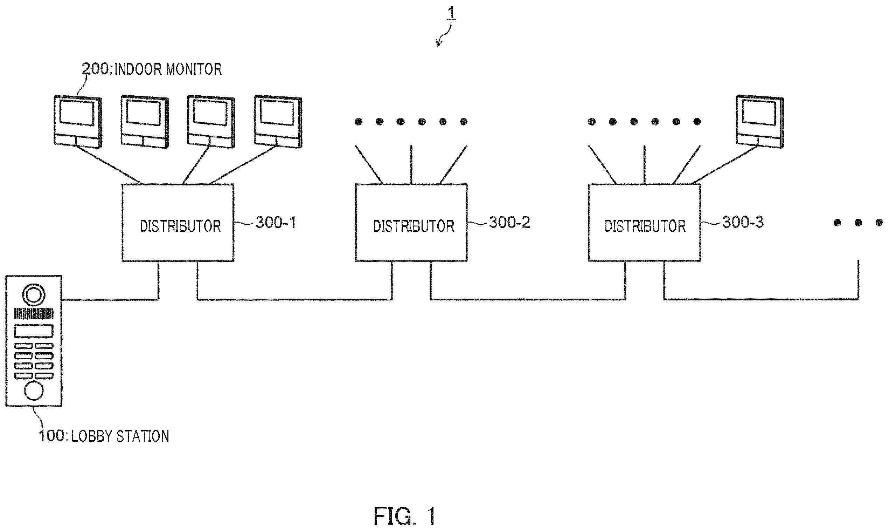

First, an outline of a door phone system of the present disclosure will be described with reference to FIG. 1. As shown in FIG. 1, door phone system 1 includes lobby station 100, indoor monitors 200, and distributors 300. Lobby station 100 is an apparatus used for a visitor of a multiple dwelling house to call a resident who is a visiting destination and is installed, for example, at a shared entrance (lobby) on the first floor of the building of the multiple dwelling house. Indoor monitor 200 is an apparatus for the resident to respond in response to the call from the visitor, and is installed in each room (or each dwelling unit). Distributor 300 is apparatus to relay between lobby station 100 and indoor monitor 200, and is installed, for example, on each floor of the building.

Lobby station 100 is connected with one distributor 300-1 via a two-wire cable.

Distributors 300 are connected with each other by daisy chain wiring via the two-wire cable. Specifically, distributor 300-1 is connected with lobby station 100 in the preceding stage and distributor 300-2 in the succeeding stage. Other distributor 300-i ("i" is an integer of two or more) is connected with distributor 300-i-1 in the preceding stage and distributor 300-i+1 in the succeeding stage. Furthermore, each distributor 300 is connected with each of a plurality of indoor monitors 200 via the two-wire cable by star wiring.

Lobby station 100 transmits a video signal and an audio signal to indoor monitor 200 of a communication opposite party. Each indoor monitor 200 transmits an audio signal to lobby station 100. In addition, each indoor monitor 200 controls a camera of lobby station 100. Distributor 300 relays signals transmitted and received between lobby station 100 and indoor monitor 200.

In the following description, a direction from lobby station 100 to indoor monitor 200 is referred to as a "downlink direction," and packets and signals transmitted in the downlink direction are referred to as "downlink packets" and "downlink signals" respectively. A direction from indoor monitor 200 to lobby station 100 is referred to as an "uplink direction," and packets and signals transmitted in the uplink direction are referred to as "uplink packets" and "uplink signals" respectively.

### <Frame Format and Time Slot Format>

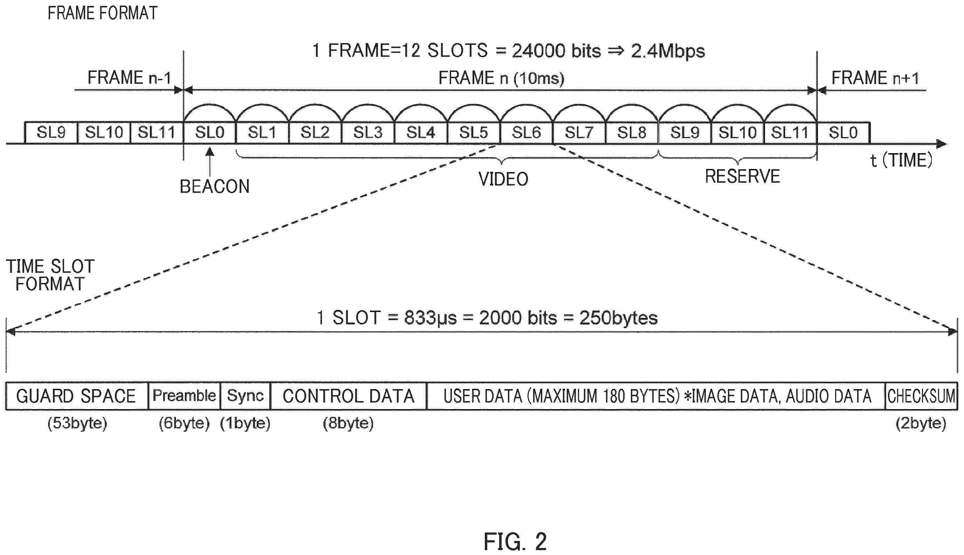

Next, a frame format and a time slot format according to the present embodiment will be described with reference to FIG. 2. As shown in FIG. 2, each frame has an area of 12,000 bits, a cycle of 10 ms, and a bit rate of 2.4 Mbps, and is divided into 12 time slots from "SL0" to "SL11". Therefore, each time slot has an area of 2,000 bits=250 bytes, a cycle of 0.833 µsec and a bit rate of 2.4 Mbps.

"SL1" to "SL8" are time slots allocated for video data transmission from lobby station 100. Note that "SL9" to "SL11" are reserve slots, and may be used as time slots for audio data or commands.

When it is necessary to synchronize and transmit data between lobby station 100 and indoor monitor 200, "SL0" may be used as a control slot (beacon).

Each time slot is divided into a guard space of 53 bytes, a preamble field (Preamble) of 6 bytes, a sync field (Sync) of 1 byte, a control data field of 8 bytes, a user data field of a variable length up to 180 bytes, and a checksum field of 2 bytes.

The guard space is a period provided between time slots for executing a command such as an initial reset on reception of each time slot. In the preamble field, preamble data having a predetermined unique pattern is written.

In the sync field, a predetermined sync pattern is written. The sync pattern is a known data string disposed in the synch field, used for establishing synchronization when reception data is received, and a data pattern used for confirming that the reception data is received at accurate timing.

In the control data field, control data indicating the data length of user data within the user data field is written. The remaining part of the control data field is a reserve space for the future. In the user data field, the user data is written. In the checksum field, a checksum which is a type of error detection code is written. In the following description, the control data, user data and checksum may be simply referred to as "data part". Note that the above configuration of the data part is one example, and the configuration may be different due to the convenience of signal processing.

When data is transmitted from lobby station 100 to indoor monitor 200 via distributor 300 in the "downlink direction" using a communication frame composed of a plurality of time slots like this, video data, audio data and command data can be assigned to respective slots and time-division multiplexed. In this case, only the video data, or the video data and audio data, or further the video data, voice data and command data can be transmitted.

When data is transmitted in the "downlink direction" using the communication frame composed of the plurality of time slots, at least one time slot may be allocated for the video data according to a system request such as its data amount. Similarly, in the case of transmitting video data and audio data, at least one time slot may be allocated for the video data and at least one time slot may be allocated for the audio data.

### <Configuration of Lobby Station>

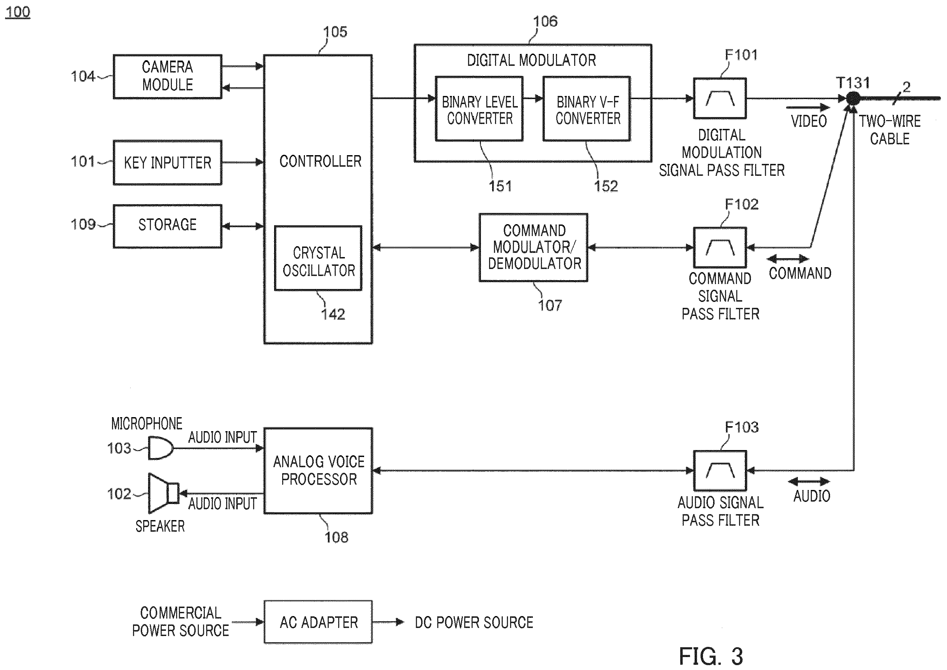

Next, a configuration of lobby station 100 will be described with reference to FIG. 3. In FIG. 3, lobby station 100 includes terminal T131 for connection with distributor 300-1.

As shown in FIG. 3, lobby station 100 mainly includes key inputter 101, speaker 102, MIC 103, camera module 104, controller 105, digital modulator 106, command modulator/demodulator 107, analog voice processor 108 and storage 109. Controller 105 internally includes crystal oscillator 142. Digital modulator 106 internally includes binary level converter 151 and binary V-F converter 152. Lobby station 100 also includes digital modulation signal pass filter F101, command signal pass filter F102 and audio signal pass filter F103.

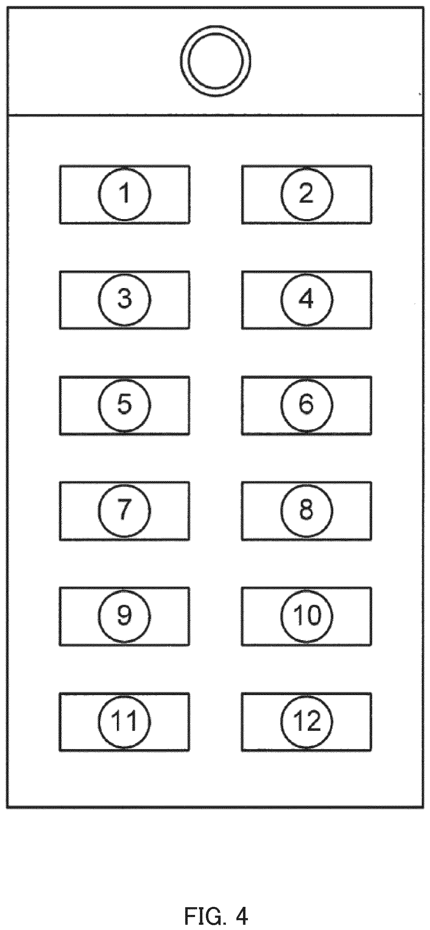

Key inputter 101 includes various buttons including key numbers assigned to respective indoor monitors 200 as shown in FIG. 4, and outputs a signal indicating a key number corresponding to button operation and a callout instruction signal to controller 105. Note that the key numbers are not limited to numbers corresponding one-on-one to physical keys as shown in FIG. 4, and may be numbers corresponding to combinations of a plurality of keys like, for example, room numbers.

Speaker 102 converts an analog audio signal output from analog voice processor 108 into voice and outputs it. MIC 103 collects voice around, converts it into an analog audio signal, and outputs it to analog voice processor 108.

Camera module 104 includes a digital camera, captures a subject to generate digital video data, and sequentially applies compression processing to the video data in accordance with a moving image compression standard such as H.264. The compressed digital video data is output to controller 105.

Controller 105 generates various command data. For example, when the signal indicating a key number and the callout instruction signal are input from key inputter 101, controller 105 generates callout command data including a transmission source ID (identifier of lobby station 100) and a transmission destination ID (identifier of indoor monitor 200 of a communication opposite party). Controller 105 then outputs the command data to command modulator/demodulator 107. Controller 105 controls the sections of lobby station 100 on the basis of contents of command data input from command modulator/demodulator 107. For example, when command data related to video is input, controller 105 controls an imaging range, backlight correction or the like in camera module 104.

Controller 105 appropriately divides the digital video data output from camera module 104 and writes divisions in the user data fields of the predetermined time slots ("SL1" to "SL8"). Controller 105 writes the data length of user data written in the user data field of each time slot in the control data field of the time slot. Furthermore, controller 105 writes preamble data and a synch pattern in each time slot. Controller 105 generates a downlink packet (transmission data) by that processing. Controller 105 outputs a digital data string of the downlink packet to digital modulator 106.

Digital modulator 106 performs digital modulation on the digital data string of the downlink packet output from controller 105. The digital modulation is a modulation scheme that discontinuously modulates a carrier wave (carrier). Typical digital modulation schemes include frequency shift keying (FSK) modulation, amplitude shift keying (ASK) modulation, phase shift keying (PSK) modulation and/or the like. In the embodiment, the case of using FSK modulation will be described.

Binary level converter 151 of digital modulator 106 converts an H (High) level of the digital data string into a first voltage value and converts an L (Low) level into a second voltage value.

Binary V-F converter 152 of digital modulator 106 outputs carriers of carrier frequencies corresponding to the respective first voltage value and second voltage value. As a result, an FSK modulation waveform is generated in which the H level is converted into a first carrier frequency (for example, 13 MHz) and the L level is converted into a second carrier frequency (for example, 9 MHz). An FSK modulated carrier (hereinafter, also referred to as a "digital modulation signal") is transmitted to indoor monitor 200 via distributors 300 after passing through digital modulation signal pass filter F101.

Command modulator/demodulator 107 performs ASK modulation on the command data output from controller 105 to obtain a command signal. The command signal is transmitted to distributor 300 after passing through command signal pass filter F102. Command modulator/demodulator 107 performs ASK demodulation on a command signal that was transmitted from distributor 300 and passed through command signal pass filter F102 and outputs command data to controller 105.

Analog voice processor 108 applies analog audio processing such as amplification to the analog audio signal output from MIC 103. The analog audio signal is transmitted to indoor monitor 200 via distributors 300 after passing through audio signal pass filter F103. Analog voice processor 108 also applies processing such as amplification to an analog audio signal that was transmitted from indoor monitor 200 and passed through audio signal pass filter F103 via distributors 300, and outputs it to speaker 102.

Storage 109 is used by controller 105 as a work area when various programs are executed. Storage 109 stores in advance various application programs and various software executed by controller 105. Storage 109 is also used as a memory for various settings, data and the like to be retained.

In lobby station 100, a commercial AC power source is converted into a DC power source by an AC adapter and DC power is supplied to the sections. Although the AC adapter is external, lobby station 100 may include a built-in power supply. In addition, lobby station 100 may include a simple display.

Digital modulation signal pass filter F101 is a filter that has a frequency band (for example, 8.5 MHz to 14 MHz) used for communication of the digital modulation signal as a pass band.

Command signal pass filter F102 is a filter that has a frequency band (for example, 300 KHz±30 kHz) used for communication of the command signal as a pass band.

Audio signal pass filter F103 is a filter that has a frequency band (for example, 270 Hz to 3.3 kHz) used for communication of the audio signal as a pass band.

### <Configuration of Indoor Monitor>

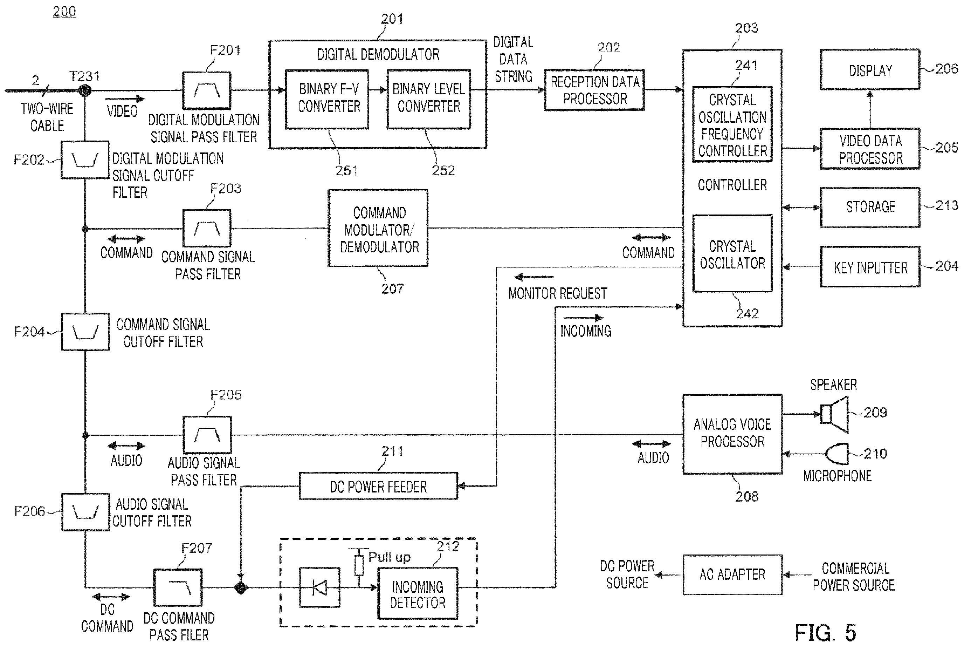

Next, a configuration of indoor monitor 200 will be described with reference to FIG. 5. Indoor monitor 200 includes terminal T231 for connection with distributor 300.

As shown in FIG. 5, indoor monitor 200 mainly includes digital demodulator 201, reception data processor 202, controller 203, key inputter 204, video data processor 205, display 206, command modulator/demodulator 207, analog voice processor 208, speaker 209, microphone 210, DC power feeder 211, incoming detector 212 and storage 213. Digital demodulator 201 internally includes binary F-V converter 251 and binary level converter 252. Controller 203 internally includes crystal oscillation frequency controller 241 and crystal oscillator 242. Indoor monitor 200 also includes digital modulation signal pass filter F201, digital modulation signal cutoff filter F202, command signal pass filter F203, command signal cutoff filter F204, audio signal pass filter F205, audio signal cutoff filter F206 and DC command pass filter F207.

Digital demodulator 201 performs digital demodulation (FSK demodulation) on the carriers (digital modulation signal) that was transmitted from lobby station 100 and passed through digital modulation signal pass filter F201 via distributors 300, and obtains a digital data string of a downlink packet. Digital demodulator 201 outputs the digital data string to reception data processor 202.

Binary F-V converter 251 of digital demodulator 201 converts the carrier of the first carrier frequency into the first voltage value and converts the carrier of the second carrier frequency into the second voltage value.

Binary level converter 252 of digital demodulator 201 converts the first voltage into the H level, converts the second voltage value into the L level, and obtains the digital data string of the downlink packet.

Reception data processor 202 applies digital signal processing corresponding to an input format of controller 203 to the digital data string output from digital demodulator 201, and outputs it to controller 203.

Controller 203 detects synchronization (timing at the beginning of each bit of the received data) with lobby station 100 by using the preamble data and the sync pattern included in the downlink packet input from reception data processor 202. Controller 203 extracts and reassembles the video data divided and written in each time slot for video data in the downlink communication frame, and outputs the regenerated video data to video data processor 205. Video data processor 205 applies image processing for making an LCD display on a screen of display 206 and outputs video data after the image processing to display 206.

Controller 203 generates various command data. For example, when an incoming detection signal is input from incoming detector 212, controller 203 generates response command data. Controller 203 then outputs the command data to command modulator/demodulator 207. In addition, controller 203 controls the sections of indoor monitor 200 on the basis of contents of the command data input from command modulator/demodulator 207.

When a user's monitor request is input from key inputter 204, controller 203 feeds power to DC power feeder 211. When the incoming detection signal is input from incoming detector 212, controller 203 performs processing (lamp lighting, chime ringing and the like) for notifying the user that there is an incoming call.

Crystal oscillation frequency controller 241 of controller 203 controls an oscillation frequency of crystal oscillator 242. Crystal oscillator 242 of controller 203 includes a crystal oscillator and fine-tunes the oscillation frequency on the basis of control of crystal oscillation frequency controller 241. Details of configurations of crystal oscillation frequency controller 241 and crystal oscillator 242 will be described later.

Key inputter 204 includes various buttons and outputs user instructions based on button operation to controller 203. Key inputter 204 may be a touch panel.

Video data processor 205 applies image processing for making an LCD display on the screen of display 206 to the video data output from controller 203 and outputs video data after the image processing to display 206. Display 206 displays the video data output from video data processor 205 on the screen.

Command modulator/demodulator 207 performs ASK demodulation on the command signal that was transmitted from distributor 300 and passed through digital modulation signal cutoff filter F202 and command signal pass filter F203, and outputs command data to controller 203. Also, command modulator/demodulator 207 performs ASK modulation on the command data output from controller 203 and obtains a command signal. The command signal is transmitted to distributor 300 after passing through command signal pass filter F203 and digital modulation signal cutoff filter F202.

Analog voice processor 208 performs analog audio processing such as amplification on the analog audio signal that was transmitted from lobby station 100, went through distributors 300 and passed through digital modulation signal cutoff filter F202, command signal cutoff filter F204 and audio signal pass filter F205, and outputs it to speaker 209. Also, analog voice processor 208 performs analog audio processing such as amplification on an analog audio signal output from microphone 210. The analog audio signal passes through audio signal pass filter F205, command signal cutoff filter F204 and digital modulation signal cutoff filter F202, and is transmitted to lobby station 100 via distributors 300.

Speaker 209 converts the analog audio signal output from analog voice processor 208 into voice and outputs it. Microphone 210 collects voice around, converts it into an analog audio signal, and outputs it to analog voice processor 208.

DC power feeder 211 starts DC power feeding when receiving the monitor request from controller 203, and thereby transmits a monitor request (DC command) to distributor 300. The DC command is transmitted to distributor 300 after passing through DC command pass filter F207, audio signal cutoff filter F206, command signal cutoff filter F204 and digital modulation signal cutoff filter F202.

Incoming detector 212 detects an incoming call that was made through call originating processing by distributor 300 in response to the call from lobby station 100 and passed through digital modulation signal cutoff filter F202, command signal cutoff filter F204, audio signal cutoff filter F206 and DC command pass filter F207. Incoming detector 212 then outputs an incoming detection signal indicating detection of the incoming call to controller 203.

Storage 213 is used by controller 203 as a work area when various programs are executed. Storage 213 stores in advance various application programs and various software executed by controller 203. Storage 213 is also used as a memory for various settings, data and the like to be retained.

In indoor monitor 200, the commercial AC power source is converted into a DC power source by an AC adapter and DC power is supplied to the sections. Although the AC adapter is external, indoor monitor 200 may include a built-in power supply.

Digital modulation signal pass filter F201 is a filter that has the frequency band (for example, 8.5 MHz to 14 MHz) used for communication of the digital modulation signal as a pass band.

Digital modulation signal cutoff filter F202 is a filter that cuts off the frequency band (for example, 8.5 MHz to 14 MHz) of the digital modulation signal and has a lower band and a higher band (for example, 8.5 MHz or less and 14 MHz or more) than the frequency band used for communication of the digital modulation signal as a pass band.

Command signal pass filter F203 is a filter that has the frequency band (for example, 300 KHz±30 kHz) used for communication of the command signal as a pass band.

Command signal cutoff filter F204 is a filter that cuts off the frequency band (for example, 300 KHz±30 kHz) of the command signal and has a lower band and a higher band (for example, 270 kHz or less and 330 kHz or more) than the frequency band used for communication of the command signal as a pass band.

Audio signal pass filter F205 is a filter that has the frequency band (for example, 270 Hz to 3.3 kHz) used for communication of the audio signal as a pass band.

Audio signal cutoff filter F206 is a filter that cuts off the frequency band (for example, 270 Hz to 3.3 kHz) used for communication of the audio signal and has a lower band and a higher band (for example, 270 Hz or less and 3.3 kHz or more) than the frequency band used for communication of the audio signal as a pass band.

DC command pass filter F207 is a filter that has a frequency band (for example, 0 Hz to 30 Hz) used for communication of the DC command as a pass band.

### <Configuration of Distributor>

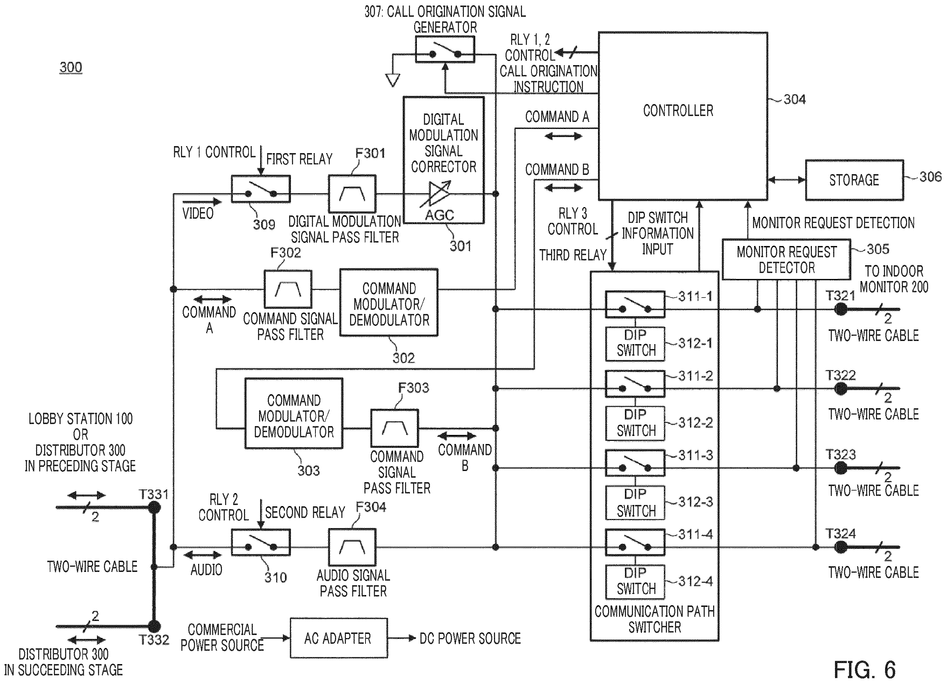

Next, a configuration of distributor 300 will be described with reference to FIG. 6. FIG. 6 shows the case where distributor 300 includes four terminals T321, T322, T323 and T324 for connection with indoor monitor 200, can simultaneously connect with up to four indoor monitors 200, and communicates with one of them. Distributor 300 also includes terminal T331 for connection with lobby station 100 or distributor 300 in the preceding stage and terminal T332 for connection with distributor 300 in the succeeding stage.

In the following, a command signal (command data) communicated between distributor 300 and lobby station 100 or distributor 300 in the preceding/succeeding stage is referred to as command signal A (command data A). In addition, a command signal (command data) communicated between distributor 300 and indoor monitor 200 is referred to as command signal B (command data B).

As shown in FIG. 6, distributor 300 includes digital modulation signal corrector 301, command modulator/demodulators 302 and 303, controller 304, monitor request detector 305, storage 306, call origination signal generator 307, first relay 309, second relay 310, third relays 311 and DIP (Dual In-line Package) switches 312. Third relays 311 and DIP switches 312 are provided as many as the number of indoor monitors 200 to be connected ("four" in FIG. 6). Distributor 300 also includes digital modulation signal pass filter F301, command signal pass filters F302 and F303, and audio signal pass filter F304.

Digital modulation signal corrector 301 amplifies a carrier if the carrier of the digital modulation signal that was transmitted by lobby station 100 and passed through first relay 309 and digital modulation signal pass filter F301 has attenuated in the two-wire cable. The digital modulation signal is transmitted to indoor monitor 200 via third relay 311.

Command modulator/demodulator 302 performs ASK demodulation on command signal A that was input from lobby station 100 or distributor 300 in the preceding/succeeding stage and passed through command signal pass filter F302 and outputs command data A to controller 304. Command modulator/demodulator 302 performs ASK modulation on command data A output from controller 304 and obtains command signal A. Command signal A is transmitted to lobby station 100 or distributor 300 in the preceding/succeeding stage after passing through command signal pass filter F 302.

Command modulator/demodulator 303 performs ASK demodulation on command signal B that was input from indoor monitor 200 and passed through command signal pass filter F303, and outputs command data B to controller 304. Command modulator/demodulator 303 performs ASK modulation on command data B output from controller 304 and obtains command signal B. Command signal B is transmitted to indoor monitor 200 after passing through command signal pass filter F303.

Controller 304 generates various command data. For example, when a monitor detection signal is input from monitor request detector 305, controller 304 generates connection request command data A. Controller 304 then outputs command data A for lobby station 100 to command modulator/demodulator 302, and outputs command data B for indoor monitor 200 to command modulator/demodulator 303. Controller 304 controls the sections of distributor 300 on the basis of contents of command data A input from command modulator/demodulator 302 and contents of command data B input from command modulator/demodulator 303.

Controller 304 controls first relay 309, second relay 310 and third relay 311 on the basis of comparison results between a key number included in callout command data and key numbers stored in storage 306. When the monitor detection signal is input from monitor request detector 305, controller 304 controls first relay 309, second relay 310 and third relay 311. Details of relay control by controller 304 will be described later.

Controller 304 outputs a call origination instruction signal to call origination signal generator 307 at call origination timing.

Monitor request detector 305 detects the monitor request (DC command) from indoor monitor 200. Monitor request detector 305 then outputs, to controller 304, a monitor detection signal indicating the monitor request has been detected and a signal identifying indoor monitor 200 that has made the monitor request.

Storage 306 is used by controller 304 as a work area when various programs are executed. Storage 306 stores in advance various application programs and various software executed by controller 304. In particular, storage 306 stores the key numbers of lobby station 100 assigned to respective indoor monitors 200 in association with terminal numbers of indoor monitor connection terminals.

When the call origination instruction signal is input, call origination signal generator 307 causes a switch to connect to short-circuit DC voltage between two wires (for example, 0 V), and thereby transmits a call origination signal (DC trigger) to connected indoor monitor 200.

First relay 309, second relay 310 and third relay 311 all switch between connection and disconnection by control of controller 304. In a standby state, all of first relay 309, second relay 310 and third relay 311 are disconnected (see FIG. 6).

Each DIP switch 312 is set correspondingly to a key number of lobby station 100 corresponding to connection destination indoor monitor 200 of connected third relay 311.

In distributor 300, an audio signal is transmitted to indoor monitor 200 via second relay 310, audio signal pass filter F304 and third relay 311. In distributor 300, the commercial AC power source is converted into a DC power source by an AC adapter and DC power is supplied to the sections. Although the AC adapter is external, distributor 300 may include a built-in power supply. In each distributor 300, DC power may be supplied from distributor 300 in the preceding stage.

Digital modulation signal pass filter F301 is a filter that has the frequency band (for example, 8.5 MHz to 14 MHz) used for communication of the digital modulation signal as a pass band.

Command signal pass filters F302 and F303 are filters that has the frequency band (for example, 300 KHz±30 kHz) used for communication of the command signal as a pass band.

Audio signal pass filter F304 is a filter that has the frequency band (for example, 270 Hz to 3.3 kHz) used for communication of the audio signal as a pass band.

### <Relay Control of Distributor>

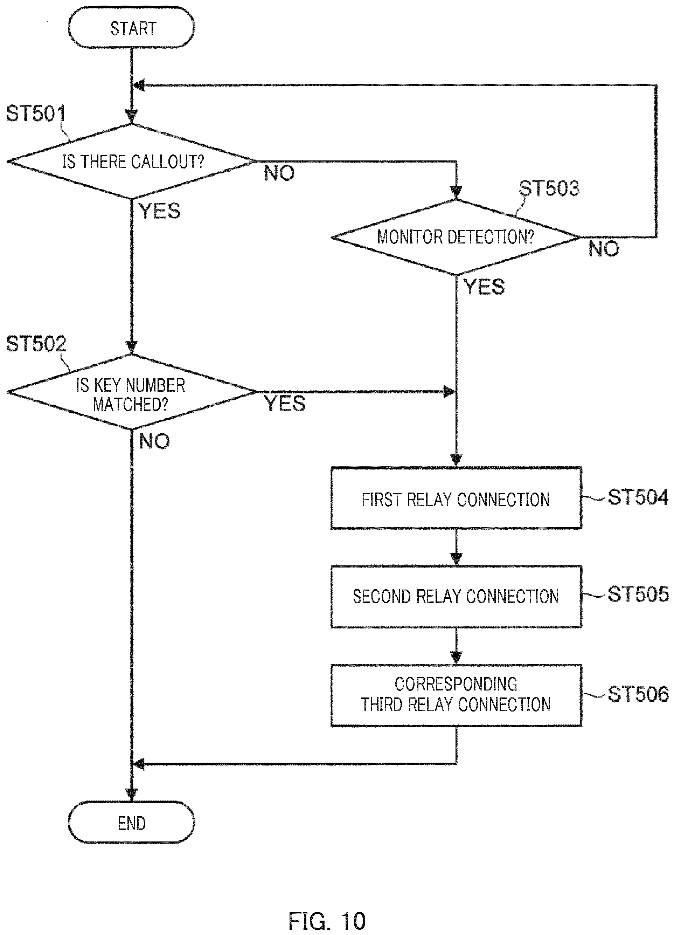

Next, details of relay control by controller 304 of distributor 300 will be described with reference to FIG. 10. In the standby state, first relay 309, second relay 310 and third relay 311 are disconnected.

When callout command data A is input from lobby station 100 or distributor 300 in the preceding stage (ST501: YES), controller 304 determines whether it matches any of the key numbers of indoor monitors 200 stored in storage 306 (ST502).

If it does not match any of the key numbers (ST502: NO), controller 304 determines that communication opposite party indoor monitor 200 is connected via other distributor 300, does not control first relay 309, second relay 310 or third relay 311, and maintains the standby state.

On the other hand if it matches any of the key numbers (ST502: YES), controller 304 determines that communication opposite party indoor monitor 200 is connected with its own apparatus, causes first relay 309 to connect (ST504), causes second relay 310 to connect (ST505), and causes third relay 311 to connect to a terminal corresponding to the matched key number (ST506). As a result, a communication path between communication opposite party indoor monitor 200 and lobby station 100 can be opened via distributor 300.

When the monitor detection signal is input from monitor request detector 305 (ST501: NO and ST503: YES), controller 304 causes first relay 309 to connect (ST504), causes second relay 310 to connect (ST505), and causes third relay 311 to connect to a terminal through which the monitor request is detected (ST506). As a result, a communication path between communication opposite party indoor monitor 200 and lobby station 100 can be opened via distributor 300.

Note that none of an incoming signal and a monitor request signal are input (ST501: NO and ST503: NO), controller 304 does not control first relay 309, second relay 310 or third relay 311, and maintains the standby state.

### <Requirement for Crystal Oscillation Frequency>

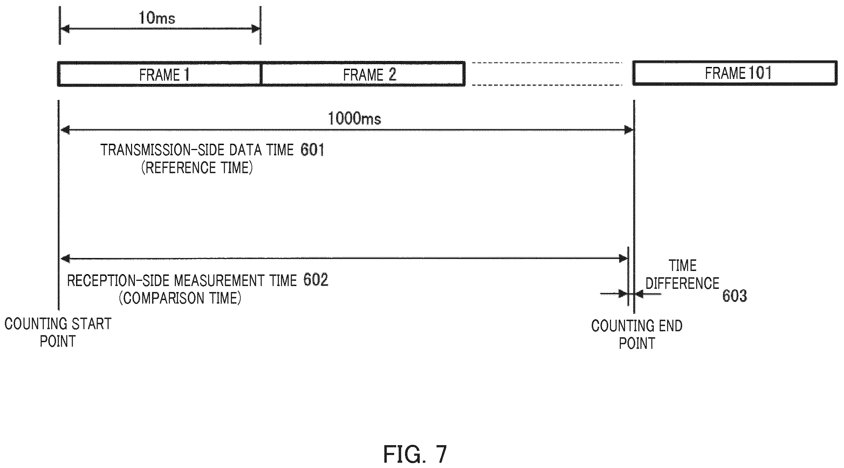

Next, requirements for a crystal oscillation frequency of the embodiment will be described with reference to FIG. 7.

When a time slot of data generated by sampling at a clock generated based on a crystal oscillation frequency of transmission-side equipment is sampled at a clock generated based on a crystal oscillation frequency of reception-side equipment, because the system of the embodiment is a system that resynchronizes at a first bit of the synch pattern within a time slot, deviation of a reception-side clock with respect to a transmission-side clock becomes the maximum in data of a final bit at 1,528 bits (=(1+8+180+2)×8) after the first bit of the synch pattern within the same time slot. Note that the system resynchronizes at the first bit of the synch pattern in the next time slot.

As a system requirement, it is assumed here that an allowable range of the deviation of the clock in the case of sampling the data of 1,528 bits of the time slot is, for example, up to 1/5 (1/10 before and after) of one-bit data length, that is, within ±65 ppm (=1/1,528×1/5×1/2). If the reception-side crystal oscillation frequency is adjusted so that the deviation of the reception-side clock is always within ±65 ppm based on the transmission-side clock, the reception-side equipment can perform decoding processing on the reception data.

Therefore, in the embodiment, as shown in FIG. 7, time difference 603 between transmission-side data time 601 and reception-side measurement time 602 is detected with a prescribed number of pieces of data (for example, the number of pieces of data for 100 frames), and the reception-side crystal oscillation frequency is adjusted according to the time difference. Transmission-side data time 601 is a time (first time) occupied by the prescribed number of pieces of data of transmission data sampled at a communication clock generated based on the crystal oscillation frequency of the transmission-side equipment. Reception-side measurement time 602 is a time (second time) corresponding to the prescribed number of pieces of data counted by a communication clock generated based on the crystal oscillation frequency of the reception-side equipment.

Here, it is assumed that the transmission-side data used as a reference time is the data string of lobby station 100, and the reception-side data used as a comparison time is the data string generated by indoor monitor 200.

If the time difference between the transmission-side data time and the reception-side measurement time is detected by using one time slot or one frame (12 time slots), the accumulation of difference is small, the time difference is small, and therefore a high-speed clock is necessary.

In the embodiment, the minimum range of adjustment width is determined in advance, for example, to maximum ±5ppm, according to the system requirements. A frequency of a measurement clock for detection of the time difference is determined by the minimum range of adjustment width.

### <Internal Configuration of Crystal Oscillation Frequency Controlled

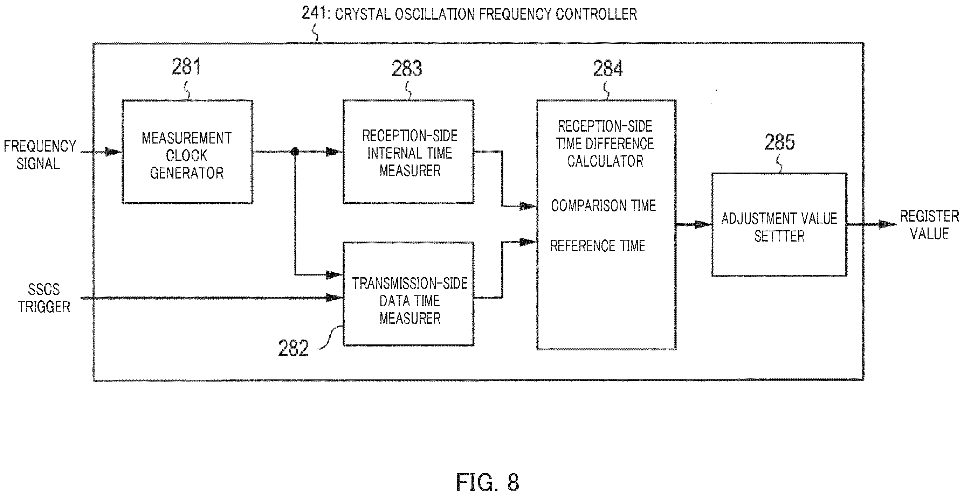

Next, details of an internal configuration of crystal oscillation frequency controller 241 of indoor monitor 200 will be described with reference to FIG. 8. As shown in FIG. 8, crystal oscillation frequency controller 241 includes measurement clock generator 281, transmission-side data time measurer 282, reception-side internal time measurer 283, reception-side time difference calculator 284 and adjustment value setter 285.

Measurement clock generator 281 generates a measurement clock of a frequency (for example, 48 MHz) based on the minimum range of adjustment width on the basis of the crystal oscillation frequency of crystal oscillator 242, and continuously outputs the measurement clock to reception-side internal time measurer 283 and transmission-side data time measurer 282. Here, both frequencies of the measurement clock and the communication clock are known values generated based on the crystal oscillation frequency of the reception-side equipment, and the frequency of the measurement clock may be equal to the frequency of the communication clock.

Transmission-side data time measurer 282 measures a time occupied by the prescribed number of pieces of data of the reception signal (time from a counting start point of the reception data to a counting end point) (hereinafter, referred to as "reference time"). The reference time corresponds to a time (601 in FIG. 7) occupied by the prescribed number of pieces of data of the transmission data sampled at the communication clock generated on the basis of the oscillation frequency inside lobby station 100 which is the transmission-side equipment.

Reception-side internal time measurer 283 reduces the time corresponding to the prescribed number of pieces of data counted by the communication clock to a count number of the measurement clock, counts the measurement clock output from measurement clock generator 281 from the counting start point by the number corresponding to the prescribed number of pieces of data, and measures a time (602 in FIG. 7) (hereinafter, referred to as "comparison time") from the counting start to the end of the measurement clock. Note that there is no limitation in particular to the counting start point in transmission-side data time measurer 282 and reception-side internal time measurer 283.

Reception-side time difference calculator 284 calculates difference (603 in FIG. 7) between the reference time measured by transmission-side data time measurer 282 and the comparison time measured by reception-side internal time measurer 283.

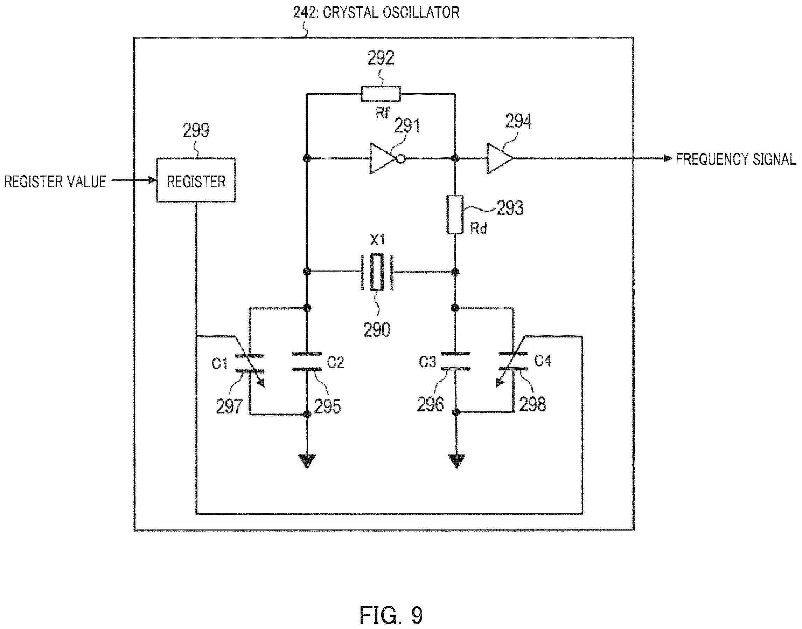

In order to reduce the difference between the reference time and the comparison time, adjustment value setter 285 sets a setting value corresponding to the time difference calculated by reception-side time difference calculator 284 to register 299 (see FIG. 9) of crystal oscillator 242, and adjusts the oscillation frequency of crystal oscillator 242. Note that if the time difference calculated by reception-side time difference calculator 284 is equal to or less than a predetermined threshold value, adjustment value setter 285 may stop adjusting the oscillation frequency. In addition, the threshold value may have hysteresis.

Adjustment value setter 285 causes storage 213 to store a setting value corresponding to the oscillation frequency of crystal oscillator 242 adjusted at the previous callout for each indoor monitor 200. Adjustment value setter 285 calls out the setting value stored in storage 213 at the next callout, and sets it as a new initial setting value to register 299.

It is assumed that the crystal oscillation frequency of lobby station 100 and the crystal oscillation frequency of indoor monitor 200 are adjusted to a center value at the time of factory shipment.

In the embodiment, the adjustment operation of the crystal oscillation frequency in lobby station 100 and indoor monitor 200 can be performed in the background in parallel with the reception data processing at the time of normal operation. As a result, there is no need to set an adjustment time and digital communication with high accuracy can be performed within a fluctuation range of initial adjustment in which no bit errors of the reception data occur in normal reception operation.

### <Internal Configuration of Crystal Oscillator>

Next, details of an internal configuration of crystal oscillator 242 of indoor monitor 200 will be described with reference to FIG. 9. As shown in FIG. 9, crystal oscillator 242 adopts a configuration of adding input capacitance 297 (capacitance value C1), output capacitance 298 (capacitance value C4) and register 299 to a general CMOS inverter crystal oscillation circuit including crystal oscillator 290 (oscillation frequency X1), inverter 291, feedback resistor 292 (resistance value Rf), dumping resistor 293 (resistance value Rd), buffer 294, input capacitance 295 (capacitance value C2) and output capacitance 296 (capacitance value C3).

Capacitance value C1 of input capacitance 297 and capacitance value C4 of output capacitance 298 are set in advance to prescribed values corresponding to initial values of register 299.

When a new values is set to register 299 by crystal oscillation frequency controller 241 (adjustment value setter 285), capacitance value C1 of input capacitance 297 or capacitance value C4 of output capacitance 298 is adjusted according to the value. As a result, the oscillation frequency of crystal oscillator 242 is fine-tuned to match the crystal oscillation frequency of transmission-side indoor monitor 200.

The internal configuration of crystal oscillator 242 of indoor monitor 200 is described here, but the internal configuration of crystal oscillator 142 of lobby station 100 is the same. The frequency adjustment of crystal oscillator 142 of lobby station 100 is used when adjusting to the center value by register setting at the time of factory shipment.

### <Sequence from Standby State to Communication State>

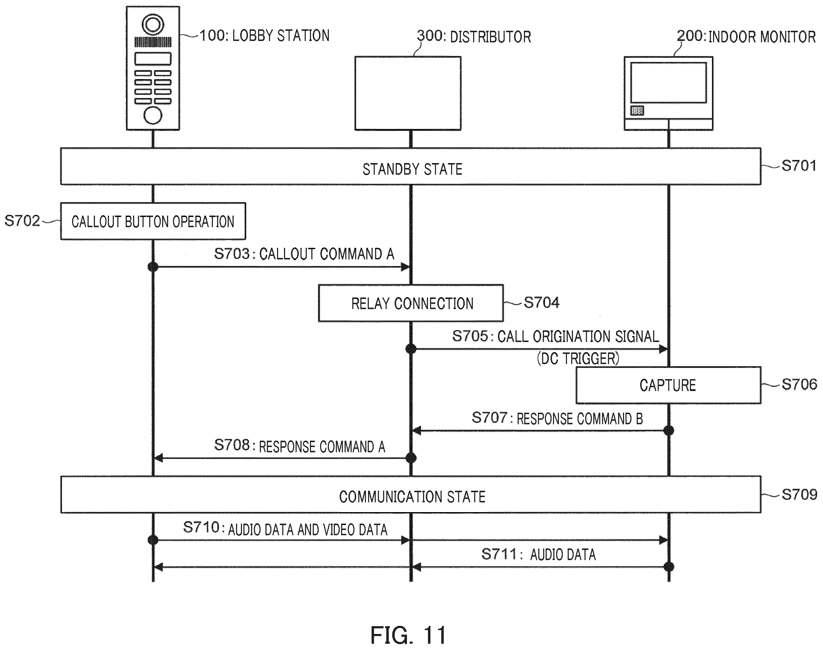

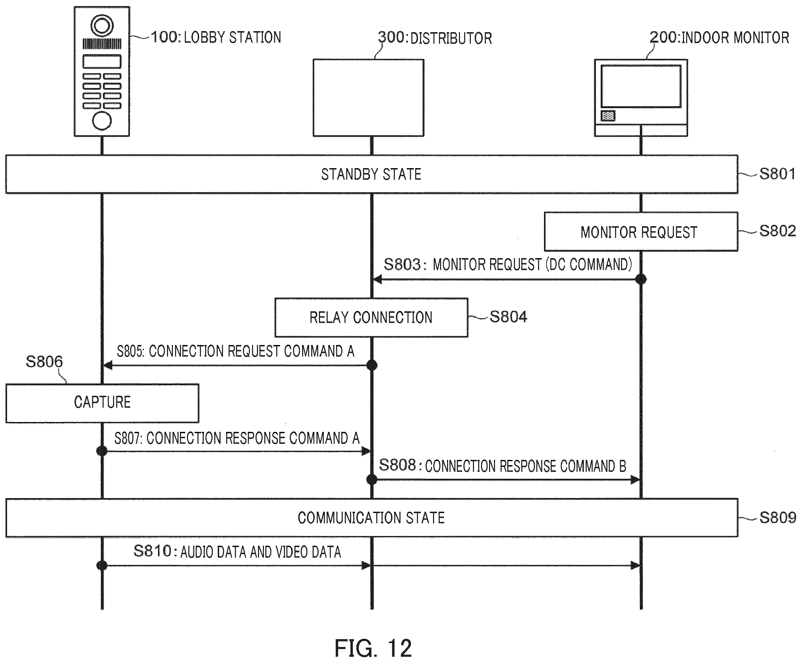

Next, a sequence from the standby state to the communication state according to the embodiment will be described with reference to FIGS. 11 and 12.

FIG. 11 illustrates a sequence in the case of activation by lobby station 100. In the standby state in which data is not transmitted or received between apparatuses (S701), when operation to depress a callout button of lobby station 100 is performed (S702), lobby station 100 transmits callout command data A to distributor 300 (S703).

If callout command data A matches any of the key numbers of indoor monitors 200 stored in storage 306, distributor 300 causes first relay 309 to connect, causes second relay 310 to connect, and causes third relay 311 to connect to a terminal corresponding to the matched key number (S704). As a result, a communication path between communication opposite party indoor monitor 200 and lobby station 100 can be opened via distributor 300. Note that the crystal oscillation frequency of crystal oscillator 242 of indoor monitor 200 is fine-tuned after securing the communication path between lobby station 100 and indoor monitor 200.

Then, distributor 300 transmits a call origination signal (DC trigger) to connected indoor monitor 200 (S705).

Indoor monitor 200 captures the call origination signal transferred from distributor 300 (S706) and transmits response command data B to distributor 300 (S707).

When receiving response command data B from indoor monitor 200, distributor 300 transmits response command data A to lobby station 100 (S708).

When lobby station 100 receives response command data A, lobby station 100, distributor 300 and indoor monitor 200 become in the communication state (S709).

Thereafter, lobby station 100 transmits video data and audio data to indoor monitor 200 via distributor 300 (S710), and indoor monitor 200 transmits audio data to lobby station 100 via distributor 300 (S711).

FIG. 12 illustrates a sequence in the case of activation by indoor monitor 200. In the standby state in which data is not transmitted or received between apparatuses (S801), when a monitor request operation is performed at key inputter 204 of indoor monitor 200 (S802), indoor monitor 200 transmits a monitor request (DC command) to distributor 300 (S803).

When receiving the monitor request, distributor 300 causes first relay 309 to connect, causes second relay 310 to connect, and causes third relay 311 to connect to a terminal corresponding to the matched key number (S804). As a result, a communication path between communication opposite party indoor monitor 200 and lobby station 100 can be opened via distributor 300. Note that the crystal oscillation frequency of crystal oscillator 142 of lobby station 100 is fine-tuned after securing the communication path between lobby station 100 and indoor monitor 200.

Distributor 300 then transmits connection request command data A to lobby station 100 (S805).

Lobby station 100 captures connection request command data A received from distributor 300 (S806) and transmits connection response command data A to distributor 300 (S807).

When receiving connection response command data A from lobby station 100, distributor 300 transmits connection response command data B to indoor monitor 200 (S808).

When indoor monitor 200 receives connection response command data B, lobby station 100, distributor 300 and indoor monitor 200 become in the communication state (S809), and monitoring of audio data and video data from lobby station 100 becomes possible (S810).

### <Frequency Band of Each Signal>

Next, frequency bands of signals transmitted and received by door phone system 1 will be described in comparison with those of the conventional analog system.

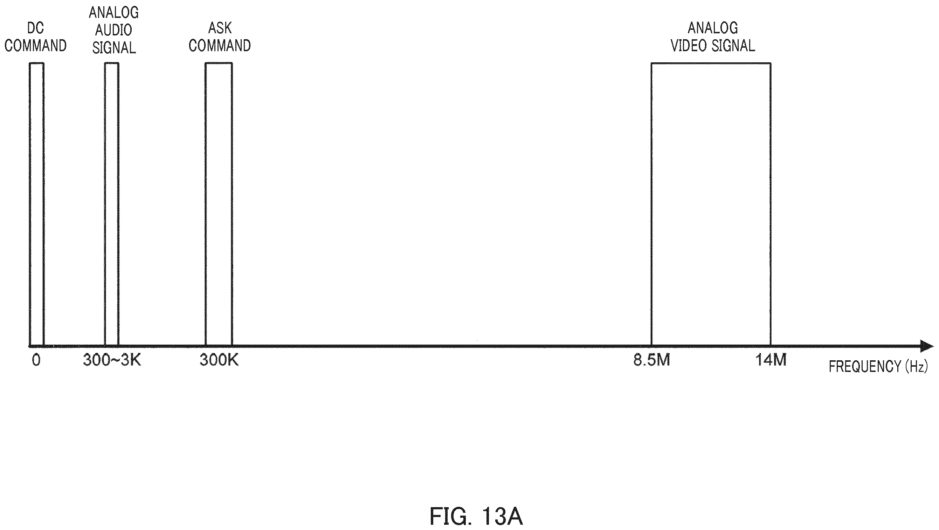

In the analog door phone system, as shown in FIG. 13A, uplink and downlink DC commands, uplink and downlink analog audio signals, uplink and downlink ASK commands, and a downlink analog video signal are transmitted and received in different frequency bands from each other.

In an example of FIG. 13A, 0 Hz (DC component) is used for the DC commands, the analog audio signals are transmitted and received in a frequency band from 300 Hz to about 3 kHz, the ASK commands are transmitted and received, for example, at a frequency of 300 kHz, and the analog video signal is transmitted and received in a frequency band from 8.5 MHz to about 14 MHz. Like this, the DC commands, analog audio signals, ASK commands and analog video signal are transmitted in the frequency bands different from each other (frequency division multiplexed).

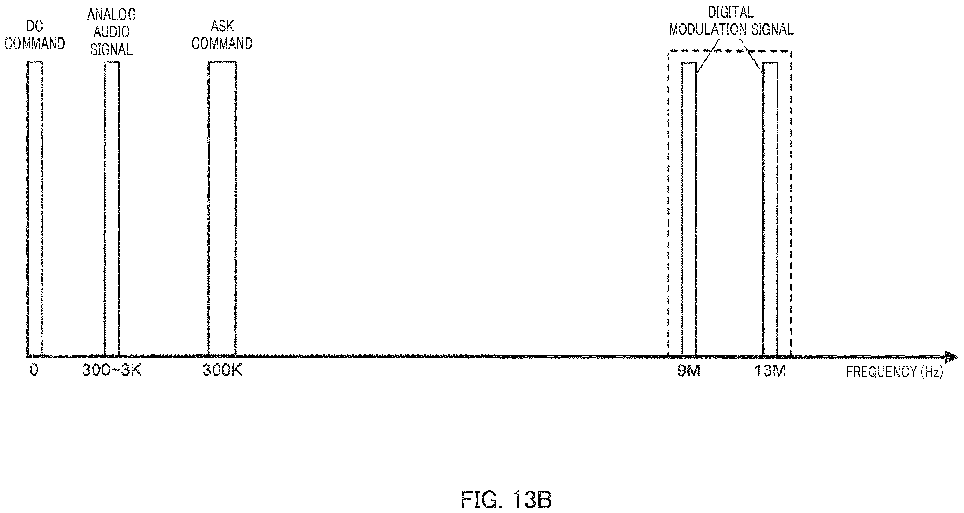

On the other hand, in door phone system 1 according to the embodiment, as shown in FIG. 13B, uplink and downlink DC commands, uplink and downlink analog audio signals, uplink and downlink ASK commands and carriers (digital modulation signal) obtained by performing digital modulation on downlink digital video data are transmitted and received in different frequency bands from each other.

In an example of FIG. 13B, 0 Hz (DC component) is used for the DC commands, a frequency band from 300 Hz to 3 kHz is used for the analog audio signals, a frequency band of 300 kHz is used for the ASK commands, and for the carriers (digital modulation signal), as an example here, frequencies of 9 MHz and 13 MHz within the conventional analog video signal band are used. Note that the numerical values of the respective frequency bands in FIG. 13B are only an example, the embodiment is not limited to the numerical values. The carriers (digital modulation signal) of door phone system 1 according to the embodiment are workable as long as they use frequencies within the analog video signal band of the conventional analog door phone system to be replaced.

As it may be clear from the comparison between FIG. 13A and FIG. 13B, frequencies (bands) of the DC commands, analog audio signals, and ASK commands in door phone system 1 according to the embodiment are the same as those of the analog door phone system. In addition, the binary frequencies of the carriers (digital modulation signal) in door phone system 1 according to the embodiment are within the range of the frequency band used for transmission and reception of the analog video signal.

Thus, the frequency bands which the filters pass/cutoff in the door phone system of the embodiment can be made common to the conventional analog door phone system. As a result, at the time of switching from the analog system to the digital system (present embodiment), the filters used in the apparatuses (lobby station and indoor monitor) of the analog door phone system can be used as they are. Furthermore, the two-wire cable and the distributors of the analog door phone system can be used as they are.

### <Effect>

As mentioned above, the present embodiment applies compression processing to the digital video data and performs digital modulation on the compressed digital video data. As a result, as long as the binary frequencies of the carriers (digital modulation signal) are made within the range of the frequency band used for transmission and reception of the analog video signal, at the time of switching from the analog system to the digital system, the filters used in the apparatuses (lobby station and indoor monitor) of the analog door phone system can be used as they are. In addition, the two-wire cable and the distributors of the analog door phone system can be used as they are. Like this, according to the embodiment, at the time of switching from the analog system to the digital system, many of the existing facilities can be used as they are without adding a new apparatus. In particular, because the two-wire cable and the distributors can be used as they are, it is not necessary to redo wiring work inside walls, switching construction becomes very simple, and labor and cost can be substantially reduced.

### (Embodiment 2)

In Embodiment 2, lobby station 100 and indoor monitor 200 described in Embodiment 1 have parts to be changed, and hence they are referred to as lobby station 100A and indoor monitor 200A hereinafter. A system configuration of the embodiment is the same as that of FIG. 1 described in Embodiment 1 so its description will be omitted. In addition, a configuration of distributor 300 of the embodiment is the same as that of FIG. 6 described in Embodiment 1 so its description will be omitted.

### <Configuration of Lobby Station>

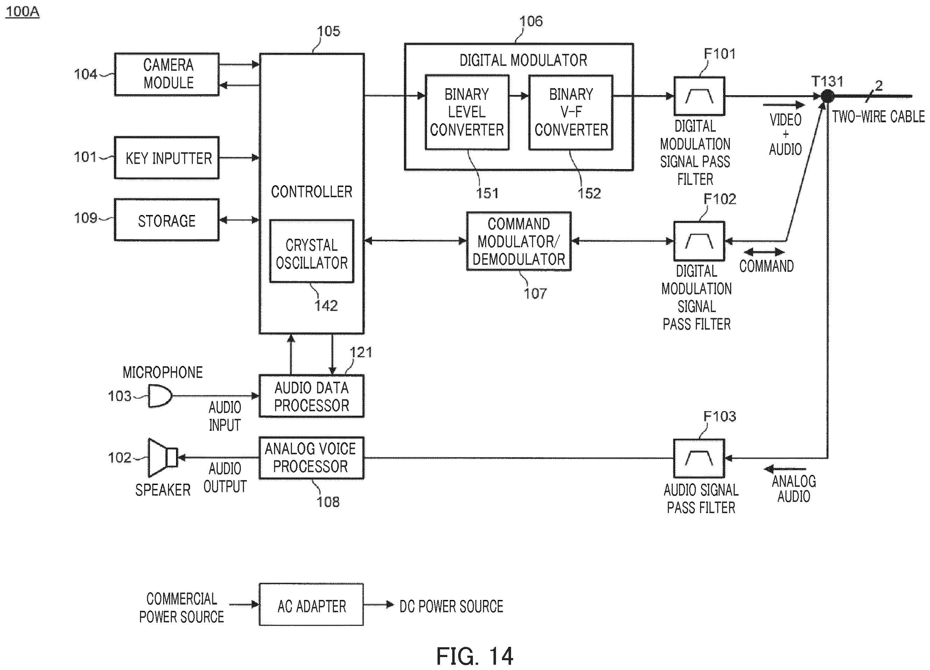

Next, a configuration of lobby station 100A of the embodiment will be described with reference to a block diagram in FIG. 14. In lobby station 100A shown in FIG. 14, components common to lobby station 100 shown in FIG. 3 are assigned the same reference signs as in FIG. 3 and descriptions thereof will be omitted. In lobby station 100A, audio data processor 121 is added and functions of controller 105 and analog voice processor 108 are changed in comparison with lobby station 100.

Audio data processor 121 performs A/D (Analog/Digital) conversion on an analog audio signal output from microphone 103 to generate digital audio data. The signal may be encoded with a voice codec such as G.726. The digital audio data is output to controller 105.

Controller 105 writes the digital audio data output from audio data processor 121 in the user data field of a predetermined time slot (for example, "SL9"). Other functions of controller 105 are common to those described in Embodiment 1.

Analog voice processor 108 receives an uplink analog audio signal and outputs an analog audio signal subjected to analog audio processing such as amplification to speaker 102.

### <Configuration of Indoor Monitor>

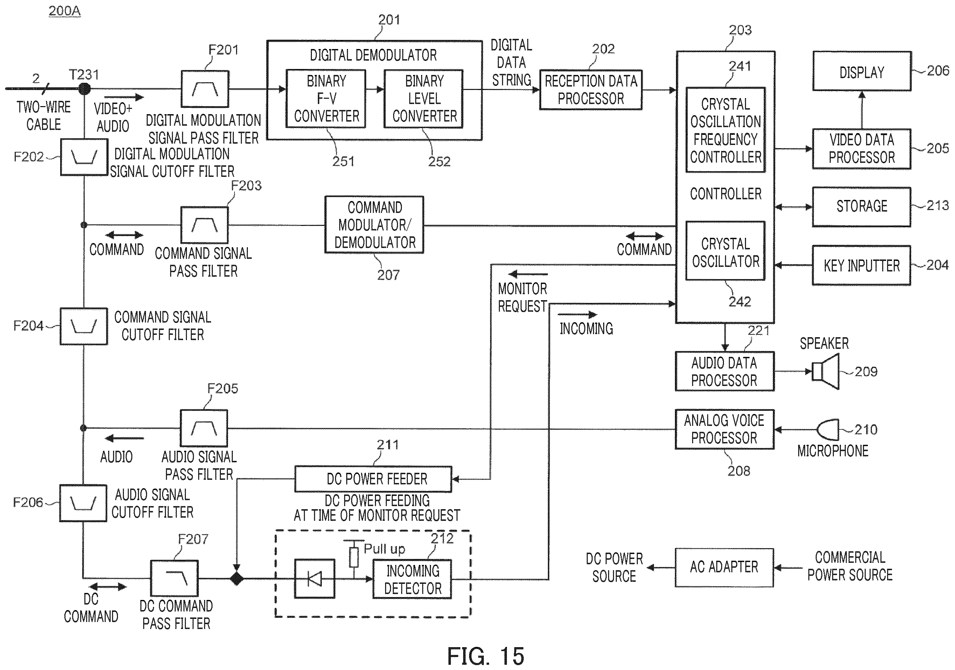

Next, a configuration of indoor monitor 200A of the embodiment will be described with reference to a block diagram in FIG. 15. Note that in indoor monitor 200A shown in FIG. 15, components common to indoor monitor 200 shown in FIG. 5 are assigned the same reference signs as in FIG. 5 and descriptions thereof will be omitted. In indoor monitor 200A, audio data processor 221 is added and functions of controller 203 and analog voice processor 208 are changed in comparison with indoor monitor 200.

Controller 203 extracts and reassembles audio data of time slots for audio data in a downlink communication frame and outputs regenerated audio data to audio data processor 221. Other functions of controller 203 are common to those described in Embodiment 1.

Audio data processor 221 performs D/A (Digital/Analog) conversion on the digital audio data output from controller 203 to generate an analog audio signal. In the case of audio data encoded by the voice codec such as G.726, audio data processor 221 performs D/A conversion on the audio data subjected to decoding processing to generate an analog audio signal. The analog audio signal is output to speaker 209.

Analog voice processor 208 applies analog audio processing such as amplification to analog audio picked up by the microphone and transmits it to lobby station 100A via distributor 300 through the two-wire cable.

### <Effect>

As mentioned above, the present embodiment applies compression processing to the digital video data and performs digital modulation on the compressed digital video data and digital audio data. As a result, as long as the binary frequencies of carrier signals of video and audio are made within the range of the frequency band used for transmission and reception of the analog video signal, at the time of switching from the analog system to the digital system, the filters used in the apparatuses (lobby station and indoor monitor) of the analog door phone system can be used as they are. In addition, the distributors of the analog door phone system can be used as they are. Like this, according to the embodiment, at the time of switching from the analog system to the digital system, many of the existing facilities can be used as they are without adding a new apparatus. According to the embodiment, as the audio data can be digitized in addition to the video data from lobby station 100A, a visitor can be confirmed by not only quality video but also quality voice in an error-free state. Furthermore, according to the embodiment, because relative delay between the video and the audio can be simply adjusted, it is possible to prevent the video and the audio from being largely deviated from each other on the indoor monitor 200A side.

The present disclosure is not limited to the above embodiments regarding types, arrangement, numbers and the like of the members, and can be changed accordingly within a range not departing from the scope of the present invention such as appropriately replacing its constituent elements with ones having similar functional effects.

For example, in the present disclosure, the number of distributors 300 and the numbers of indoor monitors 200 connected to respective distributors 300 are not particularly limited.

In the above description, the case of using FSK modulation as the digital modulation system is described, but the present disclosure is not limited to this, and other digital modulation such as ASK modulation and PSK modulation may be used. In the case of using ASK modulation, for example, the first carrier frequency is made 13 MHz, the second carrier frequency is not modulated, and the first carrier frequency is made within the range of the frequency band used for transmission and reception of the analog video signal. In the case of using PSK modulation, for example, one carrier frequency is used, the carrier is modulated so that the H level and the L level of a digital data string have phases different from each other, and the carrier frequency is made within the range of the frequency band used for transmission and reception of the analog video signal.

### Industrial Applicability

The present disclosure is suitable for use in door phone systems for multiple dwelling houses.

### Reference Signs List

1 Door phone system
100, 100A Lobby station
101, 204 Key inputter
102, 209 Speaker
103, 210 Microphone
104 Camera module
105, 203, 304 Controller
106 Digital modulator
107, 207, 302, 303 Command modulator/demodulator
108, 208 Analog voice processor
109, 213, 306 Storage
121, 221 Audio data processor
142, 242 Crystal oscillator
151 Binary level converter
152 Binary V-F converter
200, 200A Indoor monitor
201 Digital demodulator
202 Reception data processor
205 Video data processor
206 Display
211 DC power feeder
212 Incoming detector
241 Crystal oscillation frequency controller
251 Binary F-V converter
252 Binary level converter
300 Distributor
301 Digital modulation signal corrector
305 Monitor request detector
307 Call origination signal generator
309 First relay
310 Second relay
311 Third relay
312 DIP switch

## Claims

1. A lobby station in a door phone system including the lobby station, an indoor monitor, and a distributor that relays communication between the lobby station and the indoor monitor, wherein the lobby station transmits a video signal and a downlink audio signal to the indoor monitor via the distributor, and the indoor monitor transmits an uplink audio signal to the lobby station via the distributor, the lobby station comprising:
a camera module that captures a subject to generate digital video data and applies compression processing to the digital video data;
a controller that converts the digital video data subjected to the compression processing into a packet; and
a digital modulator that performs digital modulation on a digital data string of the packet and thereby outputs the video signal of a carrier within a preset frequency band.

2. The lobby station according to claim 1, further comprising:
a microphone that converts collected voice into an analog audio signal; and
an audio modulator that modulates the analog audio signal and outputs the downlink audio signal of a carrier within a second frequency band different from the frequency band, wherein
the video signal is division multiplexed with the downlink audio signal.

3. The lobby station according to claim 1 or 2, wherein
the controller allocates at least one time slot of a communication frame composed of a plurality of time slots for the digital video data.

4. A lobby station in a door phone system including the lobby station, an indoor monitor, and a distributor that relays communication between the lobby station and the indoor monitor, wherein the lobby station transmits a video signal and a downlink audio signal to the indoor monitor via the distributor, and the indoor monitor transmits an uplink audio signal to the lobby station via the distributor, the lobby station comprising:
a camera module that captures a subject to generate digital video data and applies compression processing to the digital video data;
a microphone that collects voice around the microphone and converts the voice into an analog audio signal;
an audio data processor that performs analog/digital (A/D) conversion on the analog audio signal and thereby generates digital audio data;
a controller that converts the digital video data subjected to the compression processing and the digital audio data into a packet; and
a digital modulator that performs digital modulation on a digital data string of the packet and thereby outputs the video signal of a carrier within a preset frequency band.

5. The lobby station according to claim 4, wherein
the controller allocates at least one time slot of a communication frame composed of a plurality of time slots for the digital video data and allocates at least one other time slot for the digital audio data.

6. The lobby station according to any one of claims 1 to 5, wherein
the digital modulator performs frequency shift keying (FSK) modulation on the digital data string of the packet.

7. The lobby station according to any one of claims 1 to 5, wherein
the digital modulator performs amplitude shift keying (ASK) modulation on the digital data string of the packet.

8. The lobby station according to any one of claims 1 to 5, wherein
the digital modulator performs phase shift keying (PSK) modulation on the digital data string of the packet.

9. A door phone system comprising a lobby station, an indoor monitor, and a distributor that relays communication between the lobby station and the indoor monitor, wherein
the lobby station:
captures a subject to generate digital video data;
applies compression processing to the digital video data;
converts the digital video data subjected to the compression processing into a packet;
performs digital modulation on a digital data string of the packet and thereby generates a video signal of a carrier within a preset frequency band; and
transmits the video signal and a downlink audio signal to the indoor monitor via the distributor, and
the indoor monitor transmits an uplink audio signal to the lobby station via the distributor.

10. A door phone system comprising a lobby station, an indoor monitor, and a distributor that relays communication between the lobby station and the indoor monitor, wherein
the lobby station:
captures a subject to generate digital video data;
applies compression processing to the digital video data;
collects voice around the lobby station and converts the voice into an analog audio signal;
performs analog/digital (A/D) conversion on the analog audio signal and thereby generates digital audio data;
converts the digital video data subjected to the compression processing and the digital audio data into a packet;
performs digital modulation on a digital data string of the packet and thereby generates a video signal of a carrier within a preset frequency band; and
transmits the video signal and a downlink audio signal to the indoor monitor via the distributor, and
the indoor monitor transmits an uplink audio signal to the lobby station via the distributor.

11. A communication method of a door phone system including a lobby station, an indoor monitor, and a distributor that relays communication between the lobby station and the indoor monitor, the communication method comprising:
capturing, by the lobby station, a subject to generate digital video data;
applying, by the lobby station, compression processing to the digital video data;
converting, by the lobby station, the digital video data subjected to the compression processing into a packet;
performing, by the lobby station, digital modulation on a digital data string of the packet and thereby generating a video signal of a carrier within a preset frequency band;
transmitting, by the lobby station, the video signal and a downlink audio signal to the indoor monitor via the distributor; and
transmitting, by the indoor monitor, an uplink audio signal to the lobby station via the distributor.

12. A communication method of a door phone system including a lobby station, an indoor monitor, and a distributor that relays communication between the lobby station and the indoor monitor, the communication method comprising,
capturing, by the lobby station, a subject to generate digital video data;
applying, by the lobby station, compression processing to the digital video data;
collecting, by the lobby station, voice around and converting the voice into an analog audio signal;
performing, by the lobby station, analog/digital (A/D) conversion on the analog audio signal and thereby generating digital audio data;
converting, by the lobby station, the digital video data subjected to the compression processing and the digital audio data into a packet;
performing, by the lobby station, digital modulation on a digital data string of the packet and thereby generating a video signal of a carrier within a preset frequency band;
transmitting, by the lobby station, the video signal and a downlink audio signal to the indoor monitor via the distributors; and
transmitting, by the indoor monitor, an uplink audio signal to the lobby station via the distributor.
